# EUROPEAN PATENT APPLICATION

(11) **EP 1 172 673 A2**
(43) Date of publication of application: **16.01.2002**
(21) Application number: 01116552.9
(22) Date of filing: 09.07.2001
(51) Int. Cl.: G02B 6/38

(54) **Alignment system for fiber optic connectors**

(30) Priority: 12.07.2000 US 614757
(71) Applicant: MOLEX INCORPORATED, Lisle Illinois 60532 (US)
(72) Inventor: Szilagyi, Daniel B., Naperville, Illinois 60540 (US); Grois, Igor, Northbrook, Illinois 60063 (US); Ernst, Scot A., Plainfield, Illinois 60544 (US)
(74) Representative: Herden, Andreas F.

(57) **Abstract**

A fiber optic connector assembly (10) includes a first fiber optic connector (14) having a body (80) mounting a plurality of first ferrules (68) for terminating a plurality of optical fibers of a fiber optic cable (71). A second fiber optic connector (14) includes a body (26) mounting a plurality of second ferrules (32) for terminating a plurality of optical fibers of a fiber optic cable (16). Each second ferrule (32) is mateable with a respective one of the first ferrules (68) to define a plurality of pairs of mating ferrules. At least one alignment pin (72) projects from one of the ferrules (32,68) in each pair thereof insertable into an alignment hole (58) in the other ferrule in each pair thereof. At least one guide pin (60) projects from one of the first and second fiber optic connectors (12,14) insertable into a guide hole (86) in the other of the first and second fiber optic connectors (12,14) to facilitate aligning the alignment pins (72) with the alignment holes (58).

## Description

### Field of the Invention

This invention generally relates to the art of fiber optic connectors and, particularly, to an alignment/guide pin system for mating connectors.

### Background of the Invention

Fiber optic connectors of a wide variety of designs have been employed to terminate optical fiber cables and to facilitate connection of the cables to other cables or other optical fiber transmission devices. A typical fiber optic connector includes a ferrule which mounts and centers an optical fiber or fibers within the connector. The ferrule may be fabricated of such material as ceramic. A ferrule holder or other housing component of the connector embraces the ferrule and may be fabricated of such material as molded plastic. A spring may be disposed within the housing or ferrule holder such that the ferrule is yieldably biased forwardly for engaging another fiber-mounting ferrule of a mating connecting device.

A pair of fiber optic connectors or a connector and another optical fiber transmission device often are mated in an adapter which centers the fibers to provide low insertion losses. The adapter couples the connectors together so that their encapsulated fibers connect end-to-end. The adapter may be an in-line component, or the adapter can be designed for mounting in an opening in a panel, backplane, circuit board or the like.

One of the problems with mating fiber optic connectors of the character described above involves aligning the ferrules of opposing or mating connectors so that the fibers connect end-to-end with minimal transmission losses. For instance, it is known to provide a ferrule of one connector with a pair of alignment pins which are inserted into a pair of alignment holes in an opposing ferrule of a mating connector. The pair of alignment pins/holes typically are disposed at opposite ends of an array of terminated optical fibers. This alignment pin system has proven effective when aligning a single pair of mating ferrules. However, fiber optic connectors are being designed to mount a plurality of ferrules which terminate the optical fibers of a plurality of fiber optic cables such as ribbon-type cables. Therefore, the ferrules in each mating pair thereof include their respective alignment pins, but the number of alignment pins increase as the number of ferrules in the connector increase. Consequently, problems are encountered in aligning the alignment pins of a plurality of ferrules in one connector with the alignment holes in the ferrules of a mating connector as the number of mating pairs of ferrules increase. This invention is directed to solving these problems by providing an improved guide pin system to facilitate alignment of the alignment pin system.

### Summary of the Invention

An object, therefore, of the invention is to provide a new and improved alignment system for a fiber optic connector assembly which mounts a plurality of fiber terminating ferrules.

In the exemplary embodiment of the invention, a fiber optic connector assembly includes a first fiber optic connector having a body mounting a plurality of first ferrules for terminating a plurality of optical fibers of a fiber optic cable. Each first ferrule includes at least one alignment pin projecting therefrom. A second fiber optic connector includes a body mounting a plurality of second ferrules for terminating a plurality of optical fibers of a fiber optic cable. Each second ferrule includes an alignment hole for receiving the alignment pin of a respective one of the first ferrules when the first and second connectors are mated. At least one guide pin projects from one of the first or second fiber optic connectors insertable into a guide hole in the other of the first or second fiber optic connectors to facilitate aligning the alignment pins of the plurality of first ferrules with the alignment holes of the plurality of second ferrules.

As disclosed herein, each first ferrule of the first fiber optic connector includes a pair of the alignment pins and each second ferrule of the second fiber optic connector includes a corresponding pair of the alignment holes. A pair of the guide pins project from the one connector insertable into a corresponding pair of guide holes in the other connector. The plurality of ferrules of each connector are arranged in a given array, and the pair of guide pins and corresponding guide holes are located at opposite ends of the array of ferrules. The guide pins and guide holes may be located in the bodies of the respective connectors.

Other objects, features and advantages of the invention will be apparent from the following detailed description taken in connection with the accompanying drawings.

### Brief Description of the Drawings

The features of this invention which are believed to be novel are set forth with particularity in the appended claims. The invention, together with its objects and the advantages thereof, may be best understood by reference to the following description taken in conjunction with the accompanying drawings, in which like reference numerals identify like elements in the figures and in which:
FIGURE 1 is a perspective view of a fiber optic connector assembly incorporating the alignment pin/guide pin system of the invention;
FIGURE 2 is a top plan view of the connector assembly of Figure 1;
FIGURE 3 is a side elevational view of the connector assembly of Figure 1;
FIGURE 4 is an elevational view looking at the mating end of the cable connector;
FIGURE 5 is an exploded perspective view showing the components of the cable connector; and
FIGURE 6 is an elevational view of the mating end of the panel connector.

### Detailed Description of the Preferred Embodiment

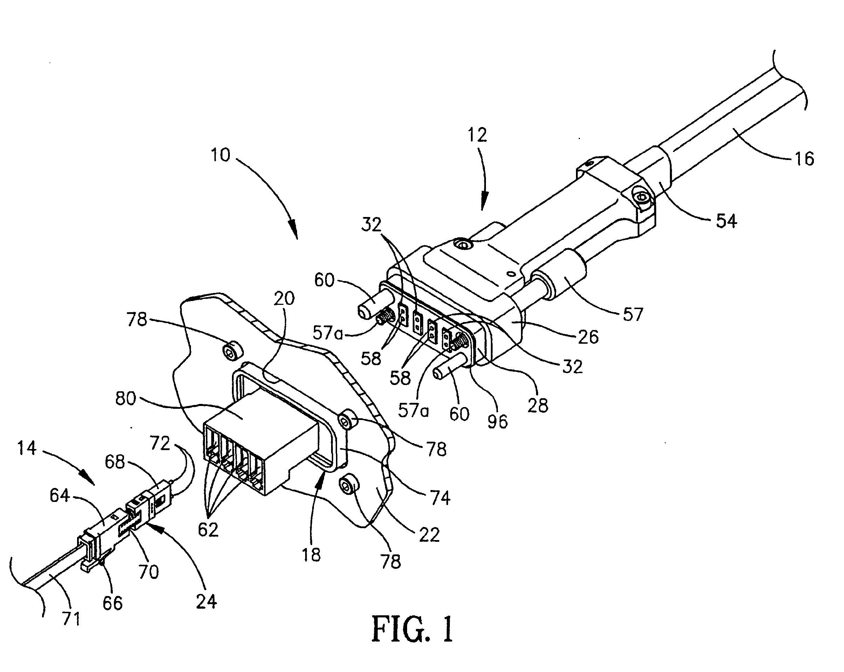

Referring to the drawings in greater detail, and first to Figures 1-3, the invention is embodied in a fiber optic connector assembly, generally designated 10, which includes a cable connector or assembly, generally designated 12, and a panel connector or assembly, generally designated 14. Cable connector 12 terminates all of the optical fibers of a plurality of fiber optic cables of a composite cable 16, as will be seen hereinafter. Panel connector 14 includes an adapter, generally designated 18, mounted in an aperture 20 of a panel 22 and receives a plurality of plug modules, generally designated 24.

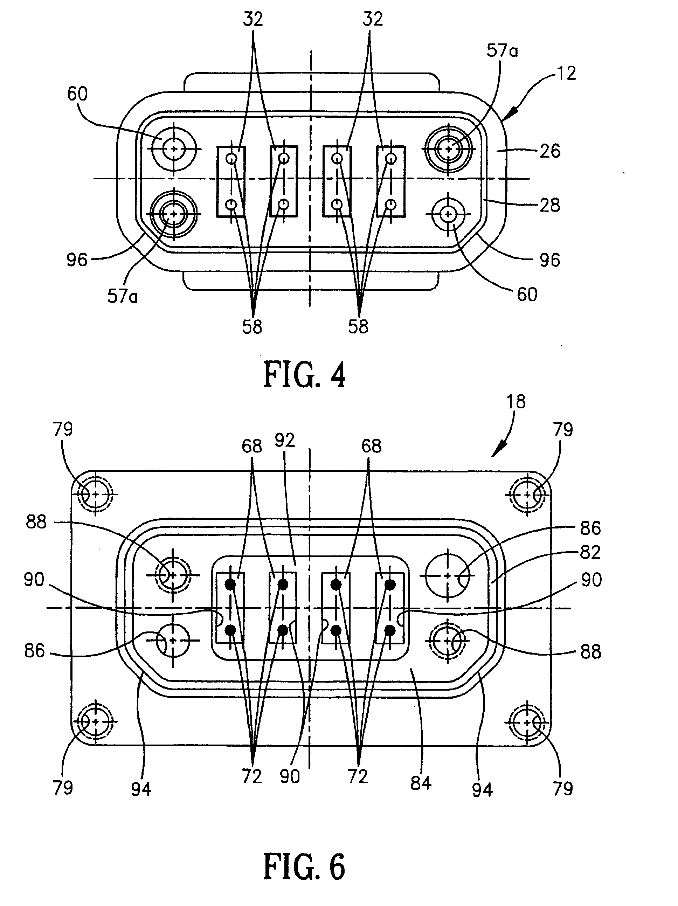

Referring to Figures 4 and 5 in conjunction with Figures 1-3, cable connector or assembly 12 includes a body 26 having a forwardly projecting plug portion 28 and a plurality of through passages 30 for mounting a plurality of ferrules 32. Each ferrule is terminated to the optical fibers of a ribbon-type fiber optic cable 34 of composite cable 16. The ferrules are mounted in a ferrule holder 36. Although four passages 30 for receiving four ferrules 32 for terminating four ribbon cables 34 are shown in the drawings, cable connector 12, as well as the entire connector assembly 10, can be designed to terminate and connect a plurality of fiber optic cables more or less than the four shown.

Still referring to Figure 5 in conjunction with Figures 1-3, cable connector 12 includes a pair of substantially identical back shell halves 38 which are secured together by appropriate fasteners such as rivets or screws 40. The back shell halves have lips 42 at the front edges thereof for insertion into grooves 44 in the top and bottom of body 26 to sandwich and secure the body between the back shell halves, with ferrule holder 36 and ferrules 32 therewithin. Strength members 49 from the stripped end of the cable 16 are folded back over a metal collar 46 mounted on the cable and a crimping 48 surrounds the collar in assembly. Back shell halves 38 have areas 50 for clamping onto crimp ring 48. Back shell halves 38 may be fabricated of metal material, along with crimp ring 48, for providing a common ground with collar 46. A strain relief boot 54 includes a front flange 54a which is captured within grooves 56 at the rear of back shell halves 38 to hold the boot in position projecting rearwardly of the back shell halves over a front portion of composite cable 16. A pair of jack screws 57 have externally threaded shafts 57 projecting through body 26 of connector 12 for securing the connector in mated condition, as will be seen hereinafter.

According to the invention, each ferrule 32 of cable connector 12 includes a pair of alignment holes 58. In addition, a pair of guide pins 60 project forwardly of the front face of plug portion 28 of body 26 of the connector, all for purposes which will be seen in greater detail hereinafter.

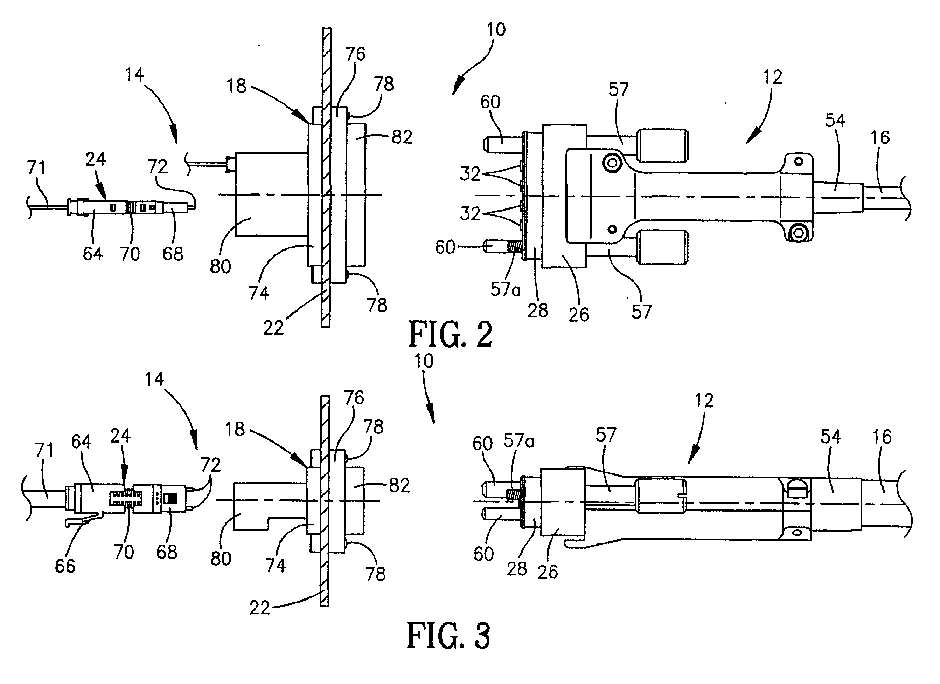

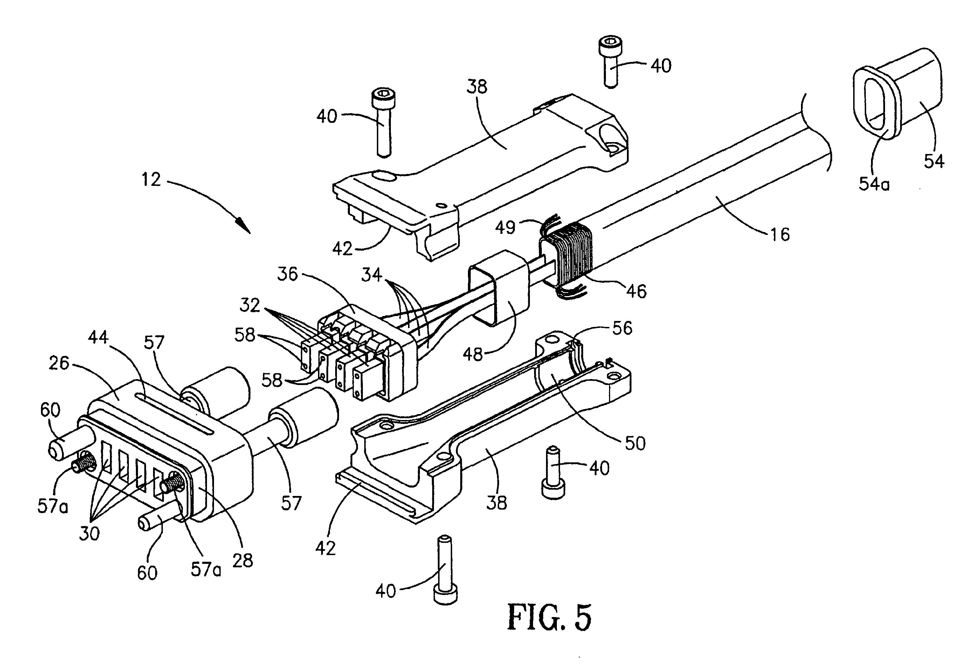

As stated above, panel connector 14 of connector assembly 10 includes an adapter 18 mounted in aperture 20 in panel 22 for receiving plug modules 24. More particularly, as seen best in Figure 1, adapter 18 includes four through passages 62 for receiving four plug modules 24, although only one plug module is shown in the drawings. Each plug module includes a rear body 64 having a latch 66 for mounting the plug module in a respective one of the passages 62. A ferrule 68 is mounted to the front of the rear body by a coil spring 70 having opposite ends fixed to the ferrule and to the rear body. The ferrule terminates the optical fibers of a ribbon type fiber optic cable 71. As seen in Figures 2 and 3 as well as Figure 1, a pair of alignment pins 72 project forwardly of ferrule 68 of each plug module 24. When all of the plug modules are fully inserted into adapter 18, alignment pins 70 are inserted into alignment holes 58 of ferrules 32 of connector cable 12.

Referring to Figure 6 in conjunction with Figures 1-3, adapter 18 includes a body portion 74 which extends through aperture 20 in panel 22. A flange 76 is integral with body portion 74 and abuts against a front face of panel 22. Appropriate fastening means 78 extend through holes 79 in flange 76 to mount adapter 18 to the panel, with body portion 74 extending through aperture 20 in the panel. As stated above, passages 62 in a housing portion 80 of the adapter receive plug modules 24 . Adapter 18 further includes a rectangular receptacle 82 projecting from flange 76 in a mating direction toward cable connector 12 as seen best in Figures 2 and 3. The receptacle is configured for receiving plug portion 28 of body 26 of the cable connector. Receptacle 82 has a bottom or base wall 84 which includes a pair of alignment holes 86 for receiving alignment pins 60 of connector 12. A pair of internally threaded holes 88 receive externally threaded ends 57 of jack screws 57 to secure cable connector 12 to adapter 18 of panel connector 14. Four rectangular holes 90 are formed in a recessed area 92 of base wall 84 through which ferrules 68 of plug modules 24 project.

The connectors are polarized so that plug portion 28 of cable connector 12 can be inserted into receptacle 82 of adapter 18 in only one orientation. Specifically, it can be seen that guide pins 60 of cable connector 12 and guide holes 86 (Fig. 6) within adapter 18 are of different diameters. In addition, as seen in Figure 6, bottom corners 94 of receptacle 82 are flattened for receiving flattened corners 96 (Fig. 1) of plug portion 28. The different sized guide pins/guide holes and the flattened corners prevent connector 12 from mating with connector 14 in any other position than the orientation desired.

From the foregoing, it can be understood that after plug modules 24 are mounted within adapter 18, cable connector 12 is mated with panel connector 14. Guide pins 60 of the cable connector are longer than alignment pins 72 projecting from ferrules 68 of the panel connector. Therefore, guide pins 60 will enter guide holes 86 (Fig. 6) of adapter 18. Guide pins 60 and guide holes 86 can be machined to precise dimensions and spacings with considerable precision. Therefore, upon full mating of the connectors, it is much easier to insert the considerably smaller alignment pins 72 of ferrules 68 of panel connector 14 into alignment holes 58 of ferrules 32 of cable connector 12. As stated in the "Background", above, it can become extremely difficult to insert alignment pins 72 into alignment holes 58 of the mating pairs of ferrules as the number of ferrule pairs and terminated cables increase.

It will be understood that the invention may be embodied in other specific forms without departing from the spirit or central characteristics thereof. The present examples and embodiments, therefore, are to be considered in all respects as illustrative and not restrictive, and the invention is not to be limited to the details given herein.

## Claims

1. A fiber optic connector assembly (10), comprising:
a first fiber optic connector (14) including a body (80) mounting a plurality of first ferrules (68) for terminating a plurality of optical fibers of a fiber optic cable (71), each first ferrule (68) including at least one alignment pin (72) projecting therefrom;
a second fiber optic connector (12) including a body (26) mounting a plurality of second ferrules (32) for terminating a plurality of optical fibers of a fiber optic cable (16), each second ferrule (32) including an alignment hole (58) for receiving the alignment pin (72) of a respective one of the first ferrules (68) when the first and second connectors are mated; and
at least one guide pin (60) projecting from one of said first and second fiber optic connectors (12,14) insertable into a guide hole (86) in the other of said first and second fiber optic connectors (12,14) to facilitate aligning the alignment pins (72) of said plurality of first ferrules (68) with the alignment holes (58) of said plurality of second ferrules (32).

2. The fiber optic connector assembly of claim 1 wherein each first ferrule (68) of the first fiber optic connector (14) includes a pair of said alignment pins (72) and each second ferrule (32) of the second fiber optic connector (12) includes a corresponding pair of said alignment holes (58).

3. The fiber optic connector system of claim 1, including a pair of said guide pins (60) projecting from said one of the connectors (12,14) insertable into a corresponding pair of guide holes (86) in the other of the connectors (12,14).

4. The fiber optic connector system of claim 3 wherein said plurality of ferrules (68,32) of each connector (14,12) are arranged in a given array, and said pair of guide pins (60) and corresponding guide holes (86) are located at opposite ends of the array of ferrules.

5. The fiber optic connector system of claim 1 wherein said guide pin (60) projects from the second fiber optic connector (12) and said guide hole (86) is in the first fiber optic connector (14).

6. The fiber optic connector system of claim 1 wherein said guide pin (60) and said guide hole (86) are located on the bodies (80,26) of the respective connectors.

7. The fiber optic connector system of claim 1 wherein said guide pin (60) is longer than said alignment pins (72) so that the guide pin (60) enters the guide hole (86) before the alignment pins (72) enter the alignment holes (58).

8. A fiber optic connector assembly (10), comprising:
a first fiber optic connector (14) including a body (80) mounting a plurality of first ferrules (68) in a given array for terminating a plurality of optical fibers of a fiber optic cable (71), each first ferrule (68) including at pair of alignment pins (72) projecting therefrom;
a second fiber optic connector (12) including a body (26) mounting a plurality of second ferrules (32) in said given array for terminating a plurality of optical fibers of a fiber optic cable (16), each second ferrule (32) including a pair of alignment holes (58) for receiving the pair of alignment pins (72) of a respective one of the first ferrules (68) when the first and second connectors (14,12) are mated;
a pair of guide pins (60) from one of said first and second fiber optic connectors (12,14) insertable into a pair of guide holes (86) in the other of said first and second fiber optic connectors (12,14) to facilitate aligning the alignment pins (72) of said plurality of first ferrules (68) with the alignment holes (58) of said plurality of second ferrules (32), the guide pins (60) and corresponding guide holes (86) being located at opposite ends of said array of ferrules (68,32); and
said guide pins (60) being longer than said alignment pins (72) so that the guide pins (60) enter the guide holes (86) before the alignment pins (72) enter the alignment holes (58).

9. The fiber optic connector system of claim 8 wherein said guide pins (60) project from the body (26) of the second fiber optic connector (12) and said guide holes (86) are in the first fiber optic connector (14).

10. A fiber optic connector assembly (10), comprising:
a first fiber optic connector (14) including a body (80) mounting a plurality of first ferrules (68) for terminating a plurality of optical fibers of a fiber optic cable (71);
a second fiber optic connector (12) including a body (26) mounting a plurality of second ferrules (32) for terminating a plurality of optical fibers of a fiber optic cable (16), each second ferrule (32) being mateable with a respective one of said first ferrules (68) to define a plurality of pairs of mating ferrules (68,32);
at least one alignment pin (72) projecting from one of the ferrules (32) in each pair (68,32) thereof insertable into an alignment hole (58) in the other ferrule (68) in each pair of thereof; and
at least one guide pin (60) projecting from one of said first and second fiber optic connectors (12,14) insertable into a guide hole (86) in the other of said first and second fiber optic connectors (12,14) to facilitate aligning said alignment pins (72) with said alignment holes (58).

11. The fiber optic connector system of claim 10, including a pair of said alignment pins (72) projecting from said one of the ferrules (68) in each pair thereof insertable into a corresponding pair of alignment holes (86) in the other ferrule (32) in each pair thereof.

12. The fiber optic connector system of claim 10, including a pair of said guide pins (60) projecting from said one of the connectors (12,14) insertable into a corresponding pair of guide holes (86) in the other of the connectors (12,14).

13. The fiber optic connector system of claim 10 wherein said guide pin (60) and said guide hole (86) are located on the bodies (80,26) of the respective connectors.

14. The fiber optic connector system of claim 10 wherein said guide pin (60) is longer than said alignment pins (72) so that the guide pin (60) enters the guide hole (86) before the alignment pins (72) enter the alignment holes (58).

15. The fiber optic connector assembly of claim 4, wherein said guide pins (60) have different diameters corresponding to diameters of guide holes (86) ensuring that the first and second connectors can be mated only one predetermined way.
